# EUROPÄISCHE PATENTSCHRIFT

(11) **EP 2 846 088 B1**
(45) Veröffentlichungstag und Bekanntmachung des Hinweises auf die Patenterteilung: **19.12.2018**
(21) Anmeldenummer: 14183328.5
(22) Anmeldetag: 03.09.2014
(51) Int. Cl.: F23B 80/04, F23J 15/02, F23N 3/08

(54) **Rauchgasreinigungseinrichtung für Kleinfeuerungsanlagen**
Flue gas purification device for small-scale furnace systems
Épurateur des gaz de fumées pour des petites chambres de combustion

(30) Priorität: 10.09.2013 DE 102013109932
(43) Veröffentlichungstag der Anmeldung: 11.03.2015
(73) Patentinhaber: RWTH Aachen, 52062 Aachen (DE)
(72) Erfinder: Quicker, Peter, 50668 Köln (DE); Neuerburg, Florian, 52066 Aachen (DE); Athmann, Uwe, 53175 Bonn (DE)
(74) Vertreter: Zenz Patentanwälte Partnerschaft mbB

(56) Entgegenhaltungen:
- WO-A1-2008/010242
- WO-A2-2004/085032
- AT-A1- 502 443
- DE-A1-102007 035 480
- DE-A1-102008 059 432
- US-A- 2 763 337
- US-A- 4 286 975
- US-A- 5 738 706

## Beschreibung

Die Erfindung betrifft eine Rauchgasreinigungseinrichtung für Kleinfeuerungsanlagen, insbesondere Biomasse-Kleinfeuerungsanlagen. Insbesondere betrifft die Erfindung eine Rauchgasreinigungseinrichtung, welche Staub aus Rauchgasen von Feuerungsanlagen abscheidet.

Kleinfeuerungsanlagen für Biomasse, insbesondere Kamine, Öfen oder Kessel in Wohnhäusern bilden Anlagen, welche signifikante Staubemissionen zusammen mit den Rauchgasen und Abgasen an die Umwelt freisetzen. Die Belastung der Umwelt durch solche Stäube wird zunehmend kritisch gesehen. Insbesondere gibt es in verschiedenen Ländern unterschiedliche Regeln, welche Grenzwerte für zulässige Staubemissionen von Kleinfeuerungsanlagen begrenzen.

Beispielsweise fordert die gesetzliche Lage in Deutschland für die Zukunft (ab dem Jahre 2015), dass Staubemissionen von Kleinfeuerungsanlagen auf 20 mg pro m³ Rauchgas und 40 mg pro m³ Rauchgas für Einzelraumfeuerungen (vgl. 1. BImSchV) zu begrenzen sind.

Es ist bekannt, für die Staubabscheidung von Feuerungsanlagen Filtrationstechnik mit unterschiedlicher Abreinigungstechnik zu verbinden. Insbesondere elektrostatische Abscheider sind bekannt. Insbesondere bei Verwendung eines elektrostatischen Feinstaubabscheiders bilden sich infolge der elektrostatischen Aufladung der Staubpartikel durch die sogenannte Sprühelektrode Konglomerate von Rußpartikeln, die durch Anhaften an der sogenannten Niederschlagelektrode abgeschieden werden (vgl. Löffler: Staubabscheiden). Dadurch wird der Kaminquerschnitt verringert und die Abgaszugswirkung der Abgasanlage beeinträchtigt.

Das Dokument AT 502 443 A1 offenbart den Oberbegriff des Anspruchs 1 und beschreibt einen Rauchgasfilter mit einem Gebläse, welcher Rauchgas im aktiven Betrieb durch einen Filtereinsatz saugt. Bei einem Gebläse-Ausfall können Öffnungen für einen ungefilterten Abstrom der Rauchgase geöffnet werden.

Die DE 102008059432 beschreibt eine Rauchgasreinigungseinrichtung, welche in einem Abgaskanal anzuordnen ist und sich keramischer Abgasfilter bedient, die durch Strömungsumkehr abzureinigen sind.

Es ist dabei zu beachten, dass grundsätzlich die abzuscheidende Staubmenge pro Heizperiode (Differenz zwischen Grenzwert und Rohgasstaubkonzentration) bei gängigen Feuerungen mit kleiner Feuerungswärme-leistung wie z.B. Kaminöfen oder Pelletkesseln eher gering ist, meist beträgt sie weniger als 1 kg pro Heizperiode. Bei Feuerungen mit größerer Feuerungswärmeleistung wie z.B. Scheitholz- und Hackschnitzelkesseln mit z.B. 30 bis 50 kW können mit bis zu 20 kg deutlich höhere Staubmengen erreicht werden. Die bekannten Filtertechniken sind jedoch insbesondere aufgrund der verwendeten automatisierten Abreinigung der Filter technisch aufwendig und auch fehleranfällig.

Aufgabe der Erfindung ist es, eine kostengünstige und robuste Einrichtung zur Staubabscheidung zur Verfügung zu stellen.

Die Aufgabe wird gelöst durch eine Rauchgasreinigungseinrichtung mit den Merkmalen des Patentanspruchs 1.

Erfindungsgemäß wird angesichts der vergleichsweise geringen Staubmengen zunächst die Verwendung von Speicherfiltern als einfache und preiswerte sowie robuste Alternative zu automatisch abzureinigenden Filtern vorgeschlagen.

Die Speicher- oder auch Tiefenfiltration ist grundsätzlich bei der Reinigung von bereitgestellten Atemgasen, beispielsweise im Bereich der Klima- oder Belüftungstechnik bekannt und bewährt. Im Bereich der Partikelgröße von Feinstäuben aus Kleinfeuerungsanlagen verfügen filternde Abscheider, verglichen mit elektrostatischen Abscheidern, über eine bis zu 5%-Punkten bessere Abscheideleistung.

Erfindungsgemäß wird eine Lösung vorgeschlagen, welche sowohl die robuste und verlässliche Speicherfiltration nutzt, als auch eine ausfallsichere Betriebsweise der Filteranlage erlaubt.

Gemäß der Erfindung ist die Rauchgasreinigungseinrichtung zum Anschluss an Schornsteine von Biomasse-Kleinfeuerungsanlagen ausgelegt. Die Einrichtung wird also an bestehende Schornsteine von Feuerungsanlagen gekoppelt, dem Rauchgasweg des bestehenden Schornsteins nachgeschaltet. Das Rauchgas aus dem Schornstein der Feuerungsanlage wird in die Reinigungseinrichtung eingeleitet, dort gereinigt und schließlich an die Umwelt abgegeben.

Die Rauchgasreinigungseinrichtung gemäß der Erfindung weist einerseits eine Zustromöffnung auf und eine abstromseitig von der Zustromöffnung angeordnete Abstromöffnung. Beim Aufsetzen auf einen Schornstein ist die Zustromöffnung dem Schornstein zugewandt, also unten angeordnet und die Abstromöffnung gegenüberliegend, nach oben orientiert. Das Rauchgas kann die Einrichtung von Seiten der Zustromöffnung zur Abstromöffnung hin grundsätzlich auf verschiedenen Wegen durchströmen.

Gemäß der Erfindung ist zwischen der Zustromöffnung und der Abstromöffnung zunächst ein Bypass-Raum ausgebildet. Dieser Raum ist von dem Rauchgas entlang drosselfreier Wege von der Zustromöffnung, also von unten ausgehend nach oben durchströmbar, wo das Rauchgas austreten kann. Auf diesen Wegen durch den Bypass-Raum von der Zustromöffnung zur Abstromöffnung stehen dem Rauchgas keine Drosselelemente im Wege, es ist insbesondere ausreichend freier Strömungsquerschnitt vorhanden, damit das Rauchgas den Bypass-Raum durchströmen kann. Der freie Strömungsquerschnitt durch den Bypass-Raum ist mindestens so groß wie der Strömungsquerschnitt des vorgeschalteten Schornsteins. Insbesondere ist der Querschnitt derartig ausgeführt, sodass der zusätzliche Druckverlust des Feinstaubabscheiders gering ist verglichen mit dem Druckverlust des Schornsteins. Im Rahmen dieser Anmeldung bedeutet das Bestehen drosselfreier Wege von Zustromöffnung zur Abstromöffnung demnach, dass ausreichend freier Strömungsquerschnitt durch den Bypass-Raum gebildet ist. Im inaktiven Betrieb (also ohne Rauchgasreinigung) der Einrichtung durchströmt das Rauchgas diesen Bypass-Raum gleichsam als Schornstein-Verlängerung.

In dem Bypass-Raum sind Speicherfilteranordnungen ausgebildet, die in diesem Bypass-Raum hineinragen und vom Rauchgas umströmbar sind. Unter Hineinragen ist in diesem Zusammenhang zu verstehen, dass sich Speicherfilteranordnungen seitlich, z.B. von einer einzigen Seite des Bypass-Raums in dem Bypass-Raum hineinerstrecken, wobei freie Strömungswege um die Speicherfilteranordnungen herum zwischen Zustromöffnung und Abstromöffnung verbleiben. Handelt es sich also bei den Speicherfilteranordnungen beispielsweise um plattenartige Gebilde, sind diese mit der Plattenebene in Längsrichtung entlang des Gasweges durch den Bypass-Raum orientiert, so dass bei inaktiver Rauchgasreinigungseinrichtung das Rauchgas an den Filtern vorbeiströmen kann und ungereinigt durch die Ausstromöffnung austritt.

Die Speicherfilteranordnungen sind gemäß der Erfindung so ausgebildet, dass innenliegend eine gasdurchlässige Stützstruktur ausgebildet ist. Eine solche Stützstruktur kann beispielsweise durch metallische Netze oder Lochbleche gebildet sein, sie kann aber auch durch entsprechende Kunststoffnetze oder löchrige Kunststoffplatten gebildet sein. Wesentlich ist, dass die Stützstruktur als gasdurchlässige und temperaturbeständige Stützstruktur ausgebildet ist. Auf diese Stützstruktur ist Fasermaterial aufgebracht, z. B. durch Umwickeln. Das Fasermaterial liegt also auf der Stützstruktur auf und die gesamte Speicherfilteranordnung, bestehend aus Stützstruktur und ausliegendem Fasermaterial, ragt in den Bypass-Raum hinein. Die Stützstruktur ist weiterhin so geformt, dass im Inneren der Stützstruktur ein freier Innenraum als Reingaskanal gebildet ist. Die Stützstruktur ist also beispielsweise so als Hohlkörper gebildete, dass im Inneren der Stützstruktur ein quaderförmiger oder zylindrischer oder auch sternförmiger (bei plisierter Ausführung) Raum entsteht, der für einen Gasstrom frei ist und auf der außenliegenden Seite von Fasermaterial als Speicherfilter bedeckt ist.

Diese Innenräume der Speicherfilteranordnungen sind mit einem Abzweig von dem Bypass-Raum in Gasverbindung gekoppelt, von den Innenräumen der Speicherfilteranordnungen mit Stützstruktur kann also Gas in dem Abzweig strömen. Die innenliegenden Reingaskanäle können dazu einseitig vollständig offenausgebildet sein, wobei dann diese Öffnung mit dem Abzweig gekoppelt ist.

Im Abzweig selbst ist wenigstens ein Radialventilator (oder auch Halbradialventilator) angeordnet, welcher den Druck im Abzweig gegenüber dem Bypass-Raum verringert. Abstromseitig des Radialventilators wiederum ist für das Reingas ein Auslass vorgesehen, durch den das Reingas (gereinigtes Rauchgas) an die Umgebung abgegeben wird.

Wird der Radialventilator betrieben, so entsteht durch den Unterdruck ein Gasstrom von Rauchgas, der durch die Speicherfilteranordnungen, genauer durch das Fasermaterial, die Stützstruktur, die innenliegenden Reingaskanäle und den Abzweig geführt wird. Das Rauchgas nimmt also bei Betrieb des Radialventilator nicht den weiterhin freien Weg durch den Bypass-Raum, sondern, aufgrund der Druckreduzierung im Abzweig, den Weg durch die Speicherfilteranordnungen, wobei Partikel in den Speicherfilteranordnungen abgeschieden werden. Es ist dabei unvermeidlich, dass bei diesem Abziehen von Rauchgas ein vergleichbares Volumen auch durch die abstromseitige Öffnung des Bypass-Raumes abgezogen wird, so dass die Filteranordnungen von einem Gemisch aus Rauchgas und Umgebungsluft durchströmt werden.

Kommt es während des Betriebs der Feuerungsstätte aus irgendeinem Grund zu einer verminderten Reinigungswirkung, beispielsweise durch Ausfall des Radialventilators oder durch das Zusetzen des Fasermaterials, ist in keinem Moment der gefahrlose Betrieb der Feuerungsstätte gefährdet. Statt den Weg über die Filteranordnungen zu nehmen, nimmt dann das Rauchgas den ungefilterten Weg durch den Bypass-Raum.

Erfindungsgemäß wird also eine kostengünstige Tiefenfiltration verwendet, um Rauchgas aus Kleinfeuerungsanlagen zu reinigen, wobei Speicherfilter-Hohlelemente mit einer Stützstruktur eingesetzt werden, in deren Inneren ein Unterdruck zum Hindurchziehen des Rauchgases bereitgestellt wird.

Da der Radialventilator hinter dem Filtermaterial, also im Reingasweg angeordnet ist, kommt er mit Schmutzpartikeln aus dem Rauchgas nicht in Kontakt, was zu einer Lebensdauererhöhung und Minderung der Wartungsintensität führt.

In Abhängigkeit von der Verschmutzung sind die Filterelemente nach einer gewissen Anzahl von Betriebsstunden auszutauschen. Da die Filterelemente jedoch nur in den Bypass-Raum hineinragen und mit dem Abzweig in Fluidverbindung stehen, kann ein einfacher Austausch durch entsprechende bauliche Ausgestaltung und seitliche Zugänglichkeit einfach erreicht werden.

In einer bevorzugten Ausführungsform der Erfindung ist als Fasermaterial Glaswolle oder Mineralwolle vorgesehen, welche auf die Stützstruktur der erfindungsgemäßen Speicherfilteranordnungen aufgebracht ist.

Glaswolle ist ein weithin verfügbares, günstiges, temperaturbeständiges und nicht brandförderndes Material, welches sich erfindungsgemäß gut für die Filtereinrichtungen eignet. Je nach Leistung des Radialventilators und gewünschter Filterleistung können unterschiedliche Glaswolledichten und Faserdurchmesser eingesetzt werden. Bewährt haben sich beispielsweise Glaswollequalitäten mit einem Volumengewicht von etwa 20 kg/m³ und einem Faserdurchmesser von 3-6 µm. Solche Glaswolle kann auf Stützstrukturen aufgelegt und dort verklemmt oder verpresst oder auch verklebt werden, so dass die gewünschte Speicherfilteranordnung gebildet wird. Es ist dabei wesentliches Ziel, dass eine möglichst gasdichte Verbindung zwischen Fasermaterial und Rahmen geschaffen wird, Rauchgas soll nämlich durch das Fasermaterial geleitet werden und Leckageströmung zwischen dem Fasermaterial und der Stützstruktur soll minimiert werden. Die Stützstrukturen können dabei durchaus wiederverwendbar ausgebildet sein, so dass nur das Filtermaterial der Glaswolle oder Mineralwolle zu erneuern ist, wenn die Filterleistung erschöpft ist.

In einer besonders bevorzugten Ausführungsform sind die Speicherfilteranordnungen jeweils als Filterkassetten mit einer rechteckigen Rahmenstruktur ausgebildet. Die Kassetten weisen zwei parallele Stützflächen auf, zwischen denen der Reingaskanal gebildet ist. Auf den außenliegenden Seiten der Stützflächen wird das Fasermaterial, beispielsweise die Glaswolle, aufgebracht und am umlaufenden Rand verklemmt oder verpresst. So werden zwei voneinander abgewandte Filterflächen mit einem gasdichten Umfangsrahmen gebildet, wobei auf einer Seite eine Öffnung zu dem innenliegenden Freiraum gebildet ist. Diese Öffnung des Filterelementes ist dann mit dem Abzweig und dem unter Unterdruck stehenden Abzweig aus dem Bypass-Raum der Rauchgasreinigungseinrichtung gekoppelt.

In einer anderen Ausführungsform der Erfindung können Filterkerzen (vgl. DE102011122158A1, insbesondere dortige Figur 25 und zugehöriger Text.) eingesetzt werden, die sich von einer Seite des Bypass-Raumes in dem Bypass-Raum erstrecken und deren Innenraum mit dem Abzweig gekoppelt ist.

In einer erfindungsgemäßen Weiterbildung der Erfindung ist eine gasdichte Basisaufnahme für die Speicherfilteranordnungen ausgebildet, welche die im Bypass-Raum hineinragenden Filtereinrichtungen trägt. Beispielsweise handelt es sich bei einer solchen Basisaufnahme um eine metallische Platte mit darin ausgebildeten Öffnungen, in die Filterkassetten oder Filterkerzen einzuschieben sind. Die Basisaufnahme dient dann als Träger für die Filteranordnungen, kann also eine Mehrzahl von Filtereinrichtungen tragen, so dass diese zusammen mit der Basisaufnahme auch entnehmbar sind oder zumindest in dieser stabil gehalten werden. Ein Flansch an den Filterelementen kann zur Befestigung an der Basisaufnahme dienen. Eine solche Basisaufnahme kann eine Seitenwand des Bypass-Raumes bilden, also eine Trennwand zwischen Bypass-Raum und Abzweig. In diesem Fall weist dann der Bypass-Raum eine Begrenzungswand auf, die Öffnungen und Befestigungsmittel für die Filterelemente aufweist, so dass die Filterelemente als Kassetten oder Kerzen einschiebbar befestigbar sind.

In einer Weiterbildung der Erfindung ist der Reingasauslass so ausgebildet, dass wenigstens ein Teil des Reingases zu der Abstromöffnung des Bypass-Raumes geleitet wird.

Wie oben bereits beschrieben, ist bei der erfindungsgemäßen Einrichtung unvermeidlich und auch vorgesehen, dass Umgebungsluft bei ordnungsgemäßem Betrieb zusammen mit dem Rauchgas durch den Bypass-Raum eingesaugt wird und durch das Filtersystem gezogen wird. Bei erheblichen Temperaturunterschieden zwischen Umgebungsluft und Rauchgas kann es im Innenraum der Einrichtung zu einer Taupunkt-Unterschreitung mit Kondensatanfall kommen, was wiederum zu einer übermäßigen Versottung der Filter und der gesamten Einrichtung sowie deren Umgebung führt.

Je nach Betriebsort und Umgebung kann dies unproblematisch sein, insbesondere dann, wenn aufgrund der klimatischen Bedingungen eine Taupunktunterschreitung nicht wahrscheinlich ist.

In Betriebssituationen, wo eine solche Taupunktunterschreitung jedoch wahrscheinlich oder zu befürchten ist, sollte eine Weiterbildung der Erfindung zum Einsatz kommen.

In der genannten Weiterbildung der Erfindung wird das Risiko der Taupunkt-Unterschreitung jedoch erheblich reduziert oder gänzlich vermieden, indem das heiße, gereinigte Reingas der Abstromöffnung des Bypass zugeleitet wird. Wenn nun von dort Umgebungsluft angesaugt wird, besteht diese wiederum aus einem Gemisch des erwärmten, gereinigten Reingases und der Umgebungsluft. Wird dieses Gemisch zusammen mit dem Rauchgas durch die Filtereinrichtung geleitet, kann es im Inneren der Einrichtung nicht zu einer Taupunkt-Unterschreitung kommen. Ein Teil des erhitzten Reingases wird also in dieser vorteilhaften Ausgestaltung dem Innenraum der Einrichtung wieder zugeführt und sorgt für die gewünschten Betriebsbedingungen.

Die Erfindung kann grundsätzlich mit oder ohne dieser Rezirkulierung des Reingases in den Filterprozess ausgebildet werden. Bei der Gefahr der Taupunktunterschreitung leistet jedoch die Weiterbildung der Erfindung mit teilweiser Rezirkulierung verbesserte Wartungsintervalle und Verlässlichkeit der Einrichtung.

Vorzugsweise wird das Reingas beim Zuleiten zu der Ausstromöffnung des Bypass-Raumes so umgelenkt, dass es in Richtung der Strömung aus der Abstromöffnung, also in Richtung des Außenbereichs der Einrichtung geleitet wird. Dem Reingas wird also die Vorzugsrichtung gegeben, die auch beim Durchströmend es Bypass-Raumes genommen würde. Es findet also eine Beschleunigung des Gases aus der Reinigungseinrichtung heraus statt. Dies verhindert, dass es zu einem Rauchgasstau oder unerwünschten Strömungen in der Einrichtung kommen kann. Als Leitmittel sind die gängigen Umleitmethoden, beispielsweise Leitbleche geeignet.

Gemäß einer Weiterbildung der Erfindung kann eine elektronische Steuerung der Einrichtung derart vorgesehen sein, dass der Radialventilator eingeschaltet wird, wenn ein im Zustromweg der Einrichtung angeordneter Temperaturfühler eine Mindesttemperatur anzeigt. Wird beispielsweise angezeigt, dass im Bereich des Anschlusses der Einrichtung an den Schornstein eine Temperatur von z.B. 60°C überschritten wird, deutet dies auf einen (einsetzenden) Betrieb der Feuerungsstätte hin, da diese Temperaturen in der Umgebung sonst üblicherweise nicht erreicht werden. Der Ventilator wird dann zugeschaltet, um eine Filterung der Rauchgase vorzunehmen.

Mit einer Weiterbildung der Erfindung kann ein zweiter Temperaturfühler im Reingasbereich, also im Bereich des Radialventilators vorgesehen sein, der die Temperatur des Reingases erfasst und einer Steuereinrichtung zuleitet. In Abhängigkeit von dieser Temperatur kann eine Regelung der Drehzahl des Radialventilators, und damit seiner Förderleistung erreicht werden.

Die Erfindung wird nun anhand der beiliegenden Zeichnung näher erläutert.
Figur 1a zeigt eine schematische Explosionsdarstellung einer ersten Ausführungsform der Erfindung;
Figur 1b zeigt die Ausführungsform aus Figur 1a aus einer anderen Perspektive;
Figur 2 zeigt die Ausführungsform mit entfernter Frontabdeckung;
Figur 3 zeigt die Ausführungsform mit entfernten Filterelementen.

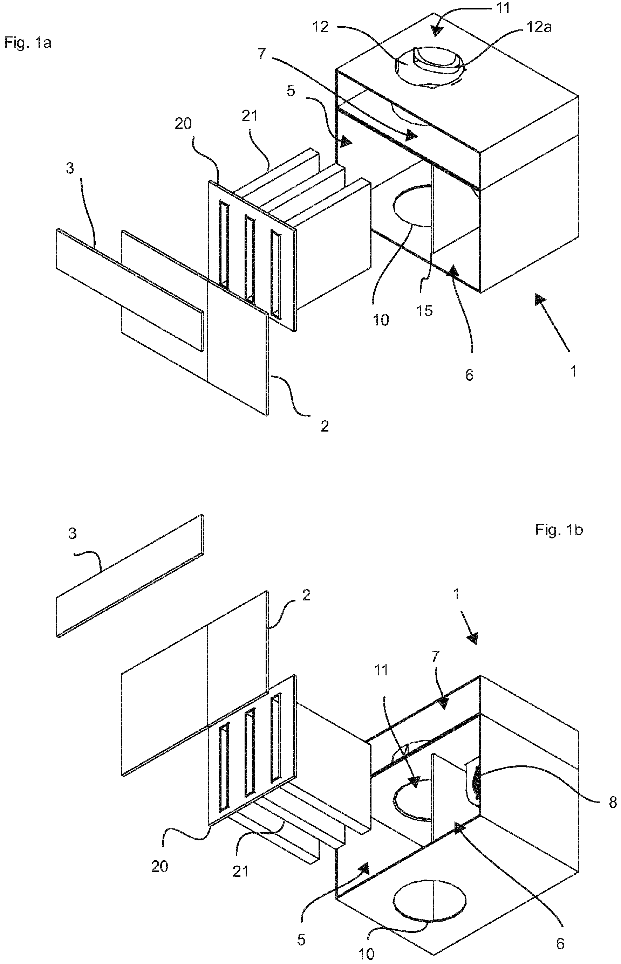

In den Figuren 1a und 1b ist in schematischer Weise ein Ausführungsbeispiel der Erfindung dargestellt. Ein Gehäuse 1 ist ein kompaktes, quaderförmiges Gehäuse ausgebildet und mit mehreren Inneneinteilungen versehen. Das Gehäuse kann aus Metall oder aus einem wetterbeständigen und UV-beständigen Kunststoff, der auch eine entsprechende Temperaturbeständigkeit aufweist, gebildet sein. Auch Faserverbundstoffe (z.B. Eternit Fermacell, Faserzement) sind verwendbar.

Zu dem Gehäuse 1 sind abnehmbare Deckelemente 2 und 3 vorgesehen, welche die verschiedenen Abteilungen des Gehäuses gasdicht gegenüber der Umgebung verschließen. Im Inneren des Gehäuses ist einerseits ein Bypass-Raum 5 gebildet, außerdem ein Abzweig-Bereich 6 und ein Misch-Bereich 7. In dem Abzweig-Bereich ist ein Radialventilator 8 angeordnet, dies wird in den folgenden Darstellungen noch verdeutlicht.

Der Bypass-Raum 5 weist auf seiner Unterseite eine Zustromöffnung 10 auf und auf seiner Oberseite eine Abstromöffnung 11. In diesem Ausführungsbeispiel ist die Abstromöffnung 11 als Öffnung ausgebildet, die seitlich von einem Rohrstück mit Mischeinrichtung 12 begrenzt ist. Die Mischeinrichtung 12 stellt dabei in diesem Ausführungsbeispiel ein Mittel dar, um gereinigtes Rauchgas der Ausgangsöffnung 11 des Bypass-Raumes 5 zuzuleiten. In diesem Ausführungsbeispiel wird also eine Gestaltung der Erfindung gezeigt, bei der eine Rezirkulation eines Teil des warmen Reingases in die Filteranordnung erfolgt. Bei einer Ausführung ohne Rezirkulation könnten die Mischeinrichtung 12 und der Raum 7 entfallen.

Die Teilung zwischen Bypass-Raum und Abzweig 6 ist durch die Wand 15 gebildet. Diese reicht nicht bis zur Vorderseite der Einrichtung, also bis zur Abdeckung 2, sondern lässt über die gesamte Höhe des Bypass-Raumes 5 ein Strömungsweg zwischen den Räumen 5 und 6 offen. Die Frontseite des Bypass-Raumes 5 wird durch die Basis-Aufnahme in Gestalt der Filter-Aufnahmeplatte 20 verschlossen. In diese Filteraufnahme 20 sind hohle Filterkassetten 21 in entsprechende Öffnungen eingesetzt. Diese Filterkassetten sind mit Glaswolle ummantelte Lochblechstrukturen. Es ist ersichtlich, dass beim Einschub der Filterkassetten 21 und der Aufnahme 20 in den Bypass-Raum 5 Gaswege von der Öffnung 10 zu der Öffnung 11 entlang der Filterkassetten verbleiben. Wird jedoch das Gebläse 8 betrieben, so entsteht auf der dem Bypass-Raum abgewandten Seite der Abdeckung 20 ein Unterdruck und das Rauchgas wird aus dem Bypass-Raum 5 durch die Filterkassetten 21 und die Öffnungen in der Abdeckung 20 in den Raum 6 gesogen. Von dort gelangt das gereinigte Gas in den Raum 7 und wird durch die Mischeinrichtung 12 ausgestoßen.

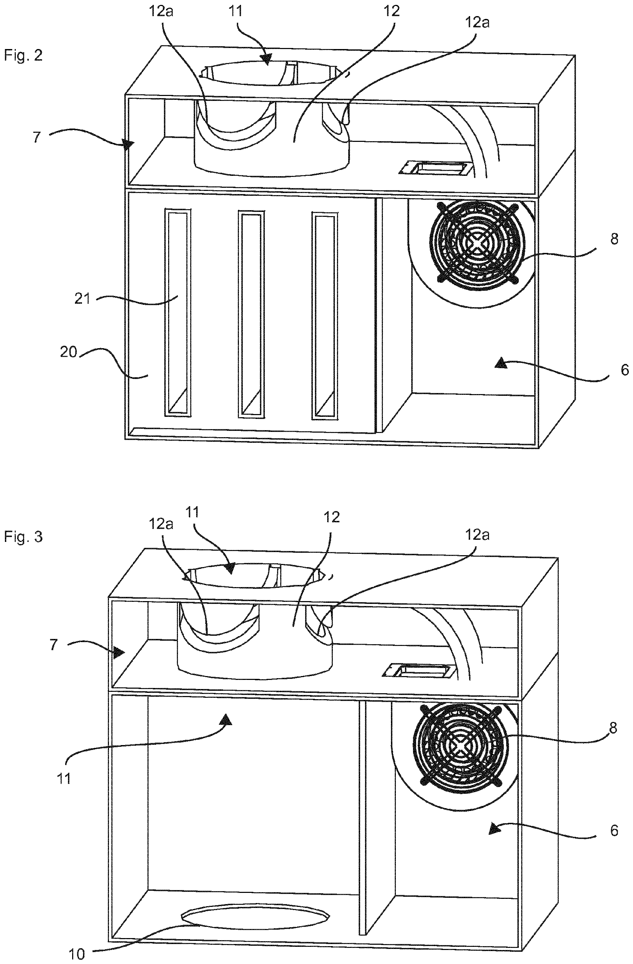

Figur 2 zeigt die Einrichtung mit eingesetzter Filtertechnik, ohne die Abdeckungen. Hier ist erkennbar, dass die Mischeinrichtung 12 umseitig angeordnete Schlitze 12a aufweist, die gleichzeitig kombinierte Leitelemente enthalten, so dass das von dem Gebläse 8 in den Raum 7 ausgestoßene Reingas mit Vorzugsrichtung nach oben aus der Mischeinrichtung 12 ausströmt. Durch die Schlitze 12a gelangt das warme Reingas in die Auslassöffnung 11, die durch die Mischeinrichtung 12 umgrenzt ist. Außerdem ist erkennbar, dass entlang der gesamten Breite und Höhe des Bypass-Raumes der Abzweig zu dem Bereich 6 offen ist, so dass über die Filtereinrichtung 20, 21 ein gleichmäßiger Unterdruck anliegt. Das Rauchgas wird in dem Bereich vor der Aufnahmeplatte 20 gesaugt und gereinigt nach oben ausgestoßen. Durch den Unterdruck wird zwangsläufig auch Gas aus der Umgebung oberhalb von Öffnung 11 durch die Öffnung 11 in den Bypass-Raum gesaugt. Dies ist jedoch bei diesem Ausführungsbeispiel ausdrücklich vorgesehen, zur Vermeidung einer Taupunkt-Unterschreitung wird jederzeit eine Mischung aus Umgebungsluft, rezykliertem Reingas und von der Feuerung nachströmendem ungereinigtem Rauchgas gefiltert.

Figur 3 zeigt die Ausführungsform mit entfernter Filtereinrichtung. Es ist ersichtlich, dass der Bypass-Raum vom Rauchgas von unten nach oben durchströmbar ist und die einzuschiebenden Filter den Rauchgasweg bei Ausfall des Filters oder Zusätzen der Filter weitgehend ungehindert durchströmen können. Die erfindungsgemäße Einrichtung ist also gänzlich risikolos einsetzbar, es kann nicht zu einem Verschluss des Schornsteins und einer gefährlichen Anreicherung von giftigen Verbrennungsgasen im Bereich der Verbrennungsstätte kommen.

## Patentansprüche

1. Rauchgasreinigungseinrichtung zum Anschluss an Schornsteine für Biomasse-Kleinfeuerungsanlagen, wobei die Reinigungseinrichtung eine Zustromöffnung (10) aufweist, welche mit dem Schornstein zur Einleitung von Rauchgasen koppelbar ist,
wobei eine Reinigungseinrichtung ausgebildet ist, welche das zuströmende Rauchgas wenigstens teilweise von Feinstaubpartikeln reinigt,
wobei eine abstromseitig der Zustromöffnung angeordnete Abstromöffnung (11) vorgesehen ist, zum Abführen des Rauchgases aus der Rauchgasreinigungseinrichtung an die Umwelt,
**dadurch gekennzeichnet,**
**dass** zwischen Zustromöffnung (10) und Abstromöffnung (11) ein Bypass-Raum (5) gebildet ist, durch den Rauchgas entlang drosselfreier Wege von Zustromöffnung (10) zu Abstromöffnung (11) unter Umgehung der Reinigungseinrichtung strömen kann, wobei
in den Bypass-Raum wenigstens eine Speicherfilteranordnung (21) hineinragt, so dass freie Strömungswege um die Speicherfilteranordnungen herum und durch den Bypass-Raum von der Zustromöffnung zu der Abstromöffnung verbleiben und wobei jede der Speicherfilteranordnungen (21) eine gasdurchlässige Stützstruktur aufweist, auf die Fasermaterial aufgebracht ist, wobei die Stützstruktur als Hohlkörper mit einem freien Innenraum ausgebildet ist, so dass die Speicherfilteranordnungen jeweils als faserummantelte, gasdurchlässige Hohlkörper mit freiem Innenraum gebildet sind, wobei
die Innenräume der Speicherfilteranordnungen (21) mit einem Abzweig (6) von dem Bypass-Raum (5) in Fluidverbindung stehen, so dass der Gasweg zu dem Abzweig ausschließlich durch die Speicherfilteranordnungen (21) führt,
wobei der Abzweig (6) mit wenigstens einem elektrischen Radialventilator (8) oder Halbradialventilator zur Unterdruckerzeugung im Abzweig (6) gegenüber dem Bypass-Raum (5) in Wirkverbindung steht, welcher Rauchgas durch die Speicherfilteranordnungen (21) in den Abzweig saugt,
wobei abstromseitig des Radialventilators ein Reingasauslass (12, 11) vorgesehen ist, durch welchen gereinigtes Rauchgas an die Umgebung abgegeben wird.

2. Rauchgasreinigungseinrichtung nach Anspruch 1, wobei das Fasermaterial aus Glaswolle oder Mineralwolle gebildet ist.

3. Rauchgasreinigungseinrichtung nach Anspruch 1 oder 2, wobei die Speicherfilteranordnungen (21) jeweils als Filterkassetten ausgebildet sind, die jeweils eine rechteckige Rahmenstruktur aufweisen, in welcher beabstandete Stützflächen angeordnet sind, welche zwischen sich den freien Innenraum als Reingaskanal bilden, wobei das Fasermaterial auf zueinander abgewandten Seiten auf die Stützflächen aufgelegt und umfangsseitig an der Rahmenstruktur befestigt ist, insbesondere durch Verpressen und/oder Verkleben und/oder verklemmen.

4. Rauchgasreinigungseinrichtung nach Anspruch 1 oder 2, wobei die Speicherfilteranordnungen jeweils als Filterkerzen ausgebildet sind.

5. Rauchgasreinigungseinrichtung nach einem der vorangehenden Ansprüche, wobei wenigstens eine gasdichte Basisaufnahme (20) für die Speicherfilteranordnungen (21) ausgebildet ist, welche den Bypass-Raum (5) gegenüber dem Abzweig (6) verschließt und welche Öffnungen aufweist, an welche die Speicherfilteranordnungen mit deren inneren Innenräumen gekoppelt sind, so dass eine Fluidverbindung zwischen Bypass-Raum (5) und Abzweig (6) ausschließlich durch Speicherfilter (21) die Öffnungen gebildet ist.

6. Rauchgasreinigungseinrichtung nach einem der vorangehenden Ansprüche, wobei der Reingasauslass (7, 12, 11) derart ausgebildet ist, dass Reingas zu der Abstromöffnung (11) des Bypass-Raumes gleitet und durch diese an die Umgebung abgegeben wird.

7. Rauchgasreinigungseinrichtung nach Anspruch 6, wobei Gasleiteinrichtungen (12a) vorgesehen sind, welche das Reingas in Richtung der Ausgangsseite der Abstromöffnung (11) leiten, also in Richtung einer Verlängerung des Gasweges durch den Bypass-Raum zwischen Zustromöffnung (10) und Abstromöffnung (11) .

8. Rauchgasreinigungseinrichtung nach einem der vorangehenden Ansprüche, wobei ein Gehäuse (1) sowohl den Bypass-Raum mit Speicherfiltern als auch den Abzweig mit Radialventialtor aufnimmt und als integrale Einrichtung mit einer gasdichten Kopplungseinrichtung zum Aufsetzen auf einen Schornstein ausgebildet ist.

9. Rauchgasreinigungseinrichtung nach einem der vorangehenden Ansprüche, wobei eine Steuereinrichtung vorgesehen ist, die mit einem an der Zustromöffnung angeordneten Temperaturfühler gekoppelt ist, um den Radialventilator beim Überschreiten einer vorgegebenen Mindesttemperatur einzuschalten.

10. Rauchgasreinigungseinrichtung nach Anspruch 9, wobei im Abzweig ein zweiter Temperaturfühler angeordnet ist, der mit der Steuereinrichtung gekoppelt ist, wobei die Steuereinrichtung die Drehzahl des Radialventilator in Abhängigkeit von der Temperatur des zweiten Temperaturfühlers regelt.

## Claims

1. A flue gas purification device for connecting to chimneys of biomass small-scale furnace systems, wherein the purification device comprises an inflow opening (10) which can be connected to the chimney for the introduction of flue gases,
wherein a purification device is formed which at least partially cleans the inflowing flue gas of fine dust particles,
wherein an outflow opening (11) is provided on the outflow side of the inflow opening to discharge the flue gas out of the flue gas purification device into the environment,
**characterised in that**
between the inflow opening (10) and the outflow opening (11) a bypass room (5) is formed through which the flue gas can flow along a throttle-free path from the inflow opening (10) to the outflow opening (11) while by-passing the purification device, wherein
at least one storage filter arrangement (21) projects into the by-pass room such that free flow paths remain around the storage filter arrangements and through the by-pass room from the inflow opening to the outflow opening and wherein each of the storage filter arrangements (21) comprises a gas-permeable support structure to which fibre material is applied, wherein the support structure is designed as a hollow body with a free interior space so that the storage filter arrangements area each in the form of fibre-encased, gas-permeable hollow bodies with a free interior space, wherein
the interior spaces of the storage filter arrangements (21) are in fluidic connection with a branch (6) of the by-pass room (5) so that the gas path to the branch exclusively leads through the storage filter arrangements (21),
wherein the branch (6) is in operative connection with the by-pass room (5) by way of at least one electrical radial fan (8) or a semi-radial fan for producing a negative pressure in the branch (6) which draws the flue gas through the storage filter arrangements (21) into the branch,
wherein on the outflow side of the radial fan a purified gas outlet (12, 11) is provided though which purified flue gas is emitted to the environment.

2. The flue gas purification device according to claim 1, wherein the fibre material is made of glass wool or mineral wool.

3. The flue gas purification device according to claim 1 or 2, wherein the storage filter arrangements (21) are each designed as filter cassettes each having a rectangular frame structure in which spaced support surfaces are arranged which between them form the free interior space as a purified gas channel, wherein the fibre material is applied to the support surfaces on sides facing away from each other and is fastened circumferentially on the frame structure, in particular through pressing and/or adhesion and/or jamming.

4. The flue gas purification device according to claim 1 or 2, wherein the storage filter arrangements are each designed as filter candles.

5. The flue gas purification device according to any one of the preceding claims, wherein at least one gas-tight base receptacle (20) for the storage filter arrangements (21) is formed which closes the by-pass room (5) vis-à-vis the branch (6) and which comprises openings to which the storage filter arrangements are connected with their inner spaces so that a fluidic connection between the by-pass room (5) and the branch (6) is exclusively formed by storage filters (21) and the openings.

6. The flue gas purification device according to any one of the preceding claims, wherein the purified gas outlet (7, 12, 11) is designed in such a way that purified gas moves to the outflow opening (11) of the by-pass room and is emitted through this into the environment.

7. The flue gas purification device according to claim 6, wherein gas guiding devices (12a) are provided which guide the purified gas in the direction of the outlet side of the outflow opening (11), i.e., in the direction of an extension of the gas path through the by-pass room between the inflow opening (10) and the outflow opening (11).

8. The flue gas purification device according to any one of the preceding claims, wherein a casing (1) accommodates both the by-pass room with storage filters and also the branch with the radial fan and is designed as an integral device with a gas-tight connection system for mounting on a chimney.

9. The flue gas purification device according to any one of the preceding claims, wherein a control device is provided which is connected to a temperature sensor arranged on the inflow opening in order to switch on the radial fan when a predetermined minimum temperature is exceeded.

10. The flue gas purification device according to claim 9, wherein in the branch a second temperature sensor is arranged which is connected to the control device, wherein the control device regulates the rotational speed of the radial fan as a function of the temperature of the second temperature sensor.

## Revendications

1. Epurateur des gaz de fumées pour raccordement à des cheminées pour des petites chambres de combustion de biomasse, l'épurateur comportant une ouverture d'affluence (10), laquelle peut être couplée à la cheminée pour introduire des gaz de fumées,
un épurateur étant constitué, lequel purifie au moins en partie les gaz de fumées affluant des fines particules de poussière,
une ouverture d'évacuation (11) disposée côté évacuation de l'ouverture d'affluence étant prévue pour évacuer les gaz de fumées de l'épurateur des gaz de fumées dans l'environnement,
**caractérisé en ce**
**qu'**un compartiment de dérivation (5) est formé entre l'ouverture d'affluence (10) et l'ouverture d'évacuation (11) à travers lequel les gaz de fumées peuvent s'écouler le long de voies sans restriction, de l'ouverture d'affluence (10) à l'ouverture d'évacuation (11) en contournant l'épurateur,
au moins un agencement de filtres à accumulation (21) faisant saillie dans le compartiment de dérivation de telle manière que des voies d'écoulement libres restent autour des agencements de filtres à accumulation et à travers le compartiment de dérivation de l'ouverture d'affluence à l'ouverture d'évacuation et chacun des agencements de filtres à accumulation (21) comportant une structure de support perméable aux gaz sur laquelle est appliquée le matériau fibreux, la structure de support étant constituée comme un corps creux avec un compartiment intérieur libre de telle manière que les agencements de filtres à accumulation sont respectivement constitués comme des corps creux perméables aux gaz entourés de fibres avec un compartiment intérieur libre,
les compartiments intérieurs des agencements de filtres à accumulation (21) étant en liaison de fluide avec une ramification (6) du compartiment de dérivation (5) de telle manière que la trajectoire des gaz vers la ramification passe exclusivement par les agencements de filtres à accumulation (21),
la ramification (6) étant en liaison fonctionnelle avec au moins un ventilateur radial électrique (8) ou ventilateur semi-radial pour générer de la dépression dans la ramification (6) par rapport au compartiment de dérivation (5), lequel aspire les gaz de fumées à travers les agencements de filtres à accumulation (21) dans la ramification,
une sortie de gaz purifiés (12, 11) étant prévue côté évacuation du ventilateur radial, à travers laquelle les gaz de fumées purifiés sont dégagés dans l'environnement ambiant.

2. Epurateur des gaz de fumées selon la revendication 1, le matériau fibreux étant formé de laine de verre ou de laine minérale.

3. Epurateur des gaz de fumées selon la revendication 1 ou 2, les agencements de filtres à accumulation (21) étant respectivement constitués comme cassette de filtre qui comportent respectivement une structure de cadre rectangulaire dans laquelle sont disposées des surfaces de support espacées, lesquelles forment entre elles le compartiment intérieur libre en tant que conduit de gaz purifiés, le matériau fibreux étant appliqué aux surfaces de support sur les côtés opposés l'un à l'autre et étant fixé en périphérie à la structure de cadre, notamment par compression et/ou collage et/ou serrage.

4. Epurateur des gaz de fumées selon la revendication 1 ou 2, les agencements de filtres à accumulation étant respectivement constitués comme des bougies filtrantes.

5. Epurateur des gaz de fumées selon l'une quelconque des revendications précédentes, au moins un logement de base étanche aux gaz (20) étant constitué pour les agencements de filtres à accumulation (21), lequel ferme le compartiment de dérivation (5) par rapport à la ramification (6) et comporte des ouvertures auxquelles les agencements de filtres à accumulation sont couplés avec leurs compartiments intérieurs internes de telle manière qu'une liaison de fluide est formée entre le compartiment de dérivation (5) et la ramification (6) exclusivement par des filtres à accumulation (21) des ouvertures.

6. Epurateur des gaz de fumées selon l'une quelconque des revendications précédentes, la sortie de gaz purifiés (7, 12, 11) étant constituée de telle sorte que les gaz purifiés glissent vers l'ouverture d'évacuation (11) du compartiment de dérivation et sont dégagés à travers celle-ci dans le milieu ambiant.

7. Epurateur des gaz de fumées selon la revendication 6, des dispositifs de conduite de gaz (12a) étant prévus, lesquels dirigent les gaz purifiés en direction du côté de sortie de l'ouverture d'évacuation (11), donc en direction d'une prolongation de la trajectoire de gaz à travers le compartiment de dérivation entre l'ouverture d'affluence (10) et l'ouverture d'évacuation (11).

8. Epurateur des gaz de fumées selon l'une quelconque des revendications précédentes, une enceinte (1) logeant tant le compartiment de dérivation avec des filtres à accumulation que la ramification avec le ventilateur radial et étant constituée sous la forme d'un dispositif intégral avec un système de couplage étanche aux gaz à poser sur une cheminée.

9. Epurateur des gaz de fumées selon l'une quelconque des revendications précédentes, un dispositif de commande étant prévu, qui est couplé avec une sonde de température disposée sur l'ouverture d'affluence pour mettre en marche le ventilateur radial en cas de dépassement d'une température minimale prédéfinie.

10. Epurateur des gaz de fumées selon la revendication 9, une deuxième sonde de température étant disposée dans la ramification, qui est couplée au dispositif de commande, le dispositif de commande régulant la vitesse de rotation du ventilateur radial en fonction de la température de la deuxième sonde de température.
